(19) Europäisches Patentamt / European Patent Office / Office européen des brevets

(11) **EP 4 372 028 A1**

(12) **EUROPEAN PATENT APPLICATION**
published in accordance with Art. 153(4) EPC

(43) Date of publication:
**22.05.2024 Bulletin 2024/21**

(21) Application number: **22855467.1**

(22) Date of filing: **10.08.2022**

(51) International Patent Classification (IPC):
**C08G 65/40** *(2006.01)*    **C08G 65/46** *(2006.01)*

(86) International application number:
**PCT/CN2022/111423**

(87) International publication number:
**WO 2023/016487 (16.02.2023 Gazette 2023/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.08.2021 CN 202110928553**

(71) Applicant: **Jilin Joinature Polymer Co., Ltd. Changchun, Jilin 130113 (CN)**

(72) Inventors:
• **XIE, Huaijie**
  **Changchun, Jilin 130113 (CN)**
• **DONG, Bo**
  **Changchun, Jilin 130113 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **HIGH-STRENGTH AND LOW-CHROMA POLYETHER ETHER KETONE AND PREPARATION METHOD THEREFOR**

(57)    A high-strength and low-chroma polyether ether ketone and a preparation method therefor. The method comprises the following steps: subjecting a first polymerized monomer and a second polymerized monomer to a nucleophilic polycondensation reaction in an inert aprotic solvent in the presence of alkali carbonate under the pressure of 0.15 MPa to 1.0 MPa in an inert atmosphere to obtain the polyetheretherketone. The reaction time can be shortened, the reaction temperature can be lowered, and energy and cost can be reduced; moreover, the impact strength of the polymer is improved and the color is brighter and whiter.

EP 4 372 028 A1

**Description**

**TECHNICAL FIELD**

The present invention relates to a polyaryletherketone and preparation method thereof, and belongs to the technical field of engineering plastics.

**BACKGROUND**

Since the 1960s,the development of high-performance engineering plastics has been very rapid, and fully met the requirements of advanced fields such as electronics, electrical engineering, aviation, military industry, etc.,. Poly (aryl ether ketone)s have excellent heat resistance, radiation resistance, insulation and aging resistance, etc.as aromatic semi-crystalline polymer, and have been widely used owing to excellent physical and mechanical, thermal, electrical and chemical properties Among them, Poly ether ether ketone (PEEK) is the typical representative of poly (aryl ether ketone)s, which was initially applied in national defense and gradually applied in civilian applications in the past decade. Its application fields are very wide, such as automotive manufacturing, medical care, parts and components processing, etc.

With the broadening of the application field, people have further researched polyetheretherketone, and have filed a large number of patents, such as CN1035679C, CN101125923B, and EP0278720A2. Nucleophilic substitution for performing polycondensation reaction is mostly used in the existing PEEK synthesis technology. According to this method, usually, one bisphenol compound which is used as a nucleophilic component and one or more bihalogenated benzophenone undergo polycondensation reaction in a high-boiling point inert solvent in the presence of an alkali carbonate. Such reactions usually are carried out at atmospheric pressure and high temperature, the reaction time is longer, such as 5-6 hours, and the final reaction temperature is also in a range of 300-400°C. This is a huge use of energy and cost.

In the field of electronics,The required properties for PEEK has been applied in the wafer carrier and electronic insulating film are higher strength and more bright white color However, It has been found that, due to the various influencing factors, the process for preparation of PEEK with this requirement is complex and no relevant technology has been publicly disclosed yet.

**SUMMARY**

The technical problem to be solved by the present invention is how to prepare a high-strength and low-chroma polyetheretherketone.

In order to solve the above technical problem, according to the invention, there is provided a process for the preparation of PEEK,which process comprises:

subjecting a first polymerized monomer and a second polymerized monomer to a nucleophilic polycondensation reaction in an inert aprotic solvent in the presence of an alkali carbonate under a pressure of 0.15 MPa to 1.0 MPa in an inert atmosphere to obtain the polyetheretherketone;
the first polymeric monomer is selected from any one or more of the following: hydroquinone, dihydroxybiphenyl, 4,4'-dihydroxybenzophenone, 2,2-bis(4-hydroxyphenyl)propane, 1,3-bis-(p-hydroxybenzoyl)benzene, 1,4-bis-(p-hydroxybenzoyl)benzene, α-naphthol and β-naphthol;
the second polymeric monomer is selected from any one or more of the following: 4,4'-difluorobenzophenone, 2,4'-difluorobenzophenone, 4-fluoro-4'-chloro-benzophenone, 2-fluoro-4'-chloro-benzophenone, 2-chloro-4'-fluoro-benzophenone, diphenyl ether, 4,4'-diphenoxybenzophenone, terephthaloyl chloride, and isophthaloyl chloride.

In the present invention, by preparing the polyetheretherketone under a specific pressure, the reaction time is shortened, the reaction temperature is lowered, and the energy and cost required for the preparation are lowered; moreover, a polyetheretherketone product with high impact strength and brighter white color can be prepared.

In the preparation method described above, 0.15 MPa to 1.0 MPa includes any value and all ranges and any sub-ranges thereof. For example, it includes but is not limited to, 0.2 MPa to 1.0 MPa, 0.2 MPa to 0.8 MPa, 0.2 MPa to 0.5 MPa, 0.5 MPa to 1.0 MPa, 0.5 MPa to 0.8 MPa, 0.8 MPa to 1.0 MPa, 0.15 MPa to 0.8 MPa , 0.15 MPa to 0.5 MPa, 0.15 MPa to 0.2 MPa, 0.15 MPa, 0.2 MPa, 0.5 MPa, 0.8 MPa, and 1.0 MPa.

In the preparation method described above, the nucleophilic polycondensation reaction may be performed at a temperature of 140°C to 260°C and a time of 1.5 to 2.5 hours; the temperature and the time include any and all ranges and any sub-ranges of any of these values. For example, it includes but is not limited to, first, the process is carried out at150-170° C (e.g., 160° C) for 20-30 minutes (e.g., 20 minutes, 25 minutes, or 30 minutes), then reacting at 180-210°C (e.g., 180-200°C, 190°C, 200°C, or 180°C) for 20-30 minutes (e.g., 20 minutes, 25 minutes, or 30 minutes), and finally reacting at 225-260°C (e.g. 225-260°C, 225°C, 240°C, 250°C or 260°C) until the viscosity of the system reaches 410 Pa.s (e.g., 55-90 minutes, 80 minutes, 90 minutes, 93 minutes, 70 minutes or 55 minutes).

In the preparation method described above, the molar ratio of the second polymeric monomer to the first polymeric monomer may be (1.0 to 1.1): 1, specifically 1.043: 1.

In the preparation method described above, the alkali carbonate may be sodium carbonate and/or potassium carbonate.

In the preparation method described above, the molar ratio of the alkali carbonate to the second polymeric monomer may be (1.0-1.5): 1, in particular may be 1.0: 1.

In the preparation method described above, the inert aprotic solvent may be at least one of Tetramethylene sulfone, diphenylsulfone, glycerol, dimethylacetamide and methylpyrrolidone.

In the preparation method described above, the inert atmosphere may specifically be a nitrogen gas atmosphere.

In order to solve the above technical problems, the present invention further provides a polyetheretherketone obtained by the preparation method described in any one of the foregoing.

The properties of the polyetheretherketone described in the present invention satisfy the following conditions:

$$IS \times L^* \geq 310, \text{ preferably } 330 \qquad (1);$$

where in the formula (1), IS denotes the Izod notched impact strength in $kJm^{-2}$; L* denotes the chromatic value.

The mechanical properties and the chromaticity of PEEK have been significant improved.

Further, the cantilever beam impact strength of the polyetheretherketone may be 5.5 to 9 $kJm^{-2}$, such as 5.7 $kJm^{-2}$, 6.0 $kJm^{-2}$, 7.3 $kJm^{-2}$, 8.0 $kJm^{-2}$, or 8.5 $kJm^{-2}$; and the chromatic value L* of the polyetheretherketone may be 60 to 90, such as 80 to 90.

In order to solve the above technical problems, the present invention also provides use of the polyetheretherketone in the preparation of wafer carrier or electronic insulating film.

In the present invention, the standard test sample strip is prepared by an injection molding machine , the prepared polyaryletherketone polymer is tested using a QJL impact tester to detect the Charpy beam impact strength of the sample in accordance with the standard of ISO 179/leA, and to detect the Izod notched impact strength of the sample in accordance with the standard of ISO 180/A, and the results of the impact strengths are CIS and IIS respectively. ; and the chromaticity of the sample strip is measured using a colorimeter in accordance with the standard of DIN EN ISO 11664-3-2013, and the chromatic value of the sample is obtained as L*.

The present invention adopts pressurization to reduce the reaction temperature and to shorten the reaction time during the reaction process, and moreover in the process of pressurization uses the chemical reaction kinetics to accelerate the positive direction reaction rate of the reaction, so that the alkali carbonate with original lower activity increases the reaction activity in the reaction, and therefore the obtained phenol salts quickly react with the bihalogenated benzophenone to avoid the color change of the product due to long time stay of the phenol salts. At the same time, the reaction temperature will be reduced after pressurization, so that the impurities will not be cross-linked and color-changed due to the over-high reaction temperature, which will improve the color of the polymer and improve the mechanical properties of the polymer.

## DETAILED DESCRIPTION

The present invention provides a preparation method of polyetheretherketone, comprising the following steps:

subjecting a first polymerized monomer and a second polymerized monomer to a nucleophilic polycondensation reaction in an inert aprotic solvent in the presence of an alkali carbonate under a pressure of 0.15 MPa to 1.0 MPa in an inert atmosphere to obtain the polyetheretherketone;
the first polymeric monomer being any one or more of the following : hydroquinone, dihydroxybiphenyl, 4,4'-dihydroxybenzophenone, 2,2-bis(4-hydroxyphenyl)propane, 1,3-bis-(p-hydroxybenzoyl)benzene, 1,4-bis-(p-hydroxybenzoyl)benzene, α-naphthol and β-naphthol;
the second polymeric monomer being any one or more of the following: 4,4'-difluorobenzophenone, 2,4'-difluorobenzophenone, 4-fluoro-4'-chloro-benzophenone, 2-fluoro-4'-chloro-benzophenone, 2-chloro-4'-fluoro- benzophenone, diphenyl ether, 4,4'-diphenoxybenzophenone, terephthaloyl chloride, and isophthaloyl chloride.

In the following, the present invention is described in detail using hydroquinone and 4,4'-difluorobenzophenone as examples. The present invention is described in further detail below in connection with specific embodiments, which are given only for the purpose of elucidating the present invention and not for the purpose of limiting the scope of the present invention. The following embodiments are provided as a guide for further improvements by a person of ordinary skill in the art, and do not in any way constitute a limitation of the present invention.

The experimental methods in the following embodiments, if not otherwise specified, are conventional methods and are carried out in accordance with the techniques or conditions described in the literature in the field or in accordance with the product specification. The materials, reagents and the like used in the following embodiments are commercially available if not otherwise specified.

Example 1

530.54 g of diphenylsulfone, 110.10 g of 4,4'- difluorobenzophenone, 60.71 g of sodium carbonate, and 53.22 g of hydroquinone were added sequentially to a Franz mechanically stirred high-pressure reactor. High-purity nitrogen gas was introduced to the reactor and after three times of repetition, the air in the system was completely replaced with nitrogen. Then the reaction system was pressurized to 0.2 MPa, and heated to melt. Stirring was started and adjusted to 100 rpm/min, and the reaction system was warmed to 160°C to react for 30 minutes, heated to 200°C to react for 30 minutes, and then warmed to 260°C, and maintained at 260°C to react until the viscosity of the reaction system reached 410 Pa.s. The reaction process was monitored through the viscosity; if the viscosity reached the detected value, the degree of molecular polymerization met the requirement. At this time, the reaction time was 90 minutes. The resulting material was poured into cold distilled water to get a white lump; the white lump was crushed with a grinder, washed with ethanol for 5-6 times to remove the solvent diphenylsulfone, and washed with distilled water for 5-6 times to remove the reaction-generated inorganic salts, so as to get a white powder. A standard sample strip was prepared with a small injection machine and tested for the chromatic value and the impact strength. The experimental results are shown in Table 1.

Example 2

780.63 g of diphenylsulfone, 176.16 g of 4,4'- difluorobenzophenone, 97.13 g of sodium carbonate, 85.15 g of hydroquinone were added sequentially to a Franz mechanically stirred high pressure reactor. High-purity nitrogen gas was introduced to the reactor and after three times of repetition, the air in the system was completely replaced with nitrogen gas. Then the reaction system was pressurized to 0.5 MPa, and heated to melt. Stirring was started and adjusted to 100 rpm/min, and the reaction system was warmed to 160°C to react for 30 minutes, heated to 200°C to react for 30 minutes, and then warmed to 250°C and maintained at 250°C to react until the viscosity of the reaction system reached 410 Pa.s. At this time, the reaction time was 80 minutes. The resulting material was poured cold distilled water to get a white lump; the white lump was crushed with a grinder, washed with ethanol for 5-6 times to remove the solvent diphenyl sulfone, and washed with distilled water for 5-6 times to remove the reaction-generated inorganic salts, so as to get a white powder. A standard sample strip was prepared with a small injection machine and tested for the chromatic value and the impact strength. The experimental results are shown in Table 1.

Example 3

860.32 g of diphenylsulfone, 198.20 g of 4,4'- difluorobenzophenone, 109.28 g of sodium carbonate, and 95.80 g of hydroquinone were added sequentially to a Franz mechanically stirred high-pressure reactor. High-purity nitrogen gas was introduced to the reactor and after three times of repetition, the air in the system was completely replaced with nitrogen gas. Then the reaction system was pressurized to 0.8 MPa, and heated to melt. Stirring was started and adjusted to 100 rpm/min, and the reaction system was warmed to 160°C to react for 20 minutes, heated to 190°C to react for 20 minutes, and then warmed to 240°C and maintained at 240°C for reaction until the viscosity of the reaction system reached 410 Pa.s. At this time, the reaction time was 70 minutes. The resulting material was poured into cold distilled water to get a white lump; the white lump was crushed with a grinder, washed with ethanol for 5-6 times to remove the solvent diphenyl sulfone, and washed with distilled water for 5-6 times to remove the reaction-generated inorganic salts, so as to get a white powder. A standard sample strip was prepared with a small injection machine and tested for the chromatic value and the impact strength. The experimental results are shown in Table 1.

Example 4

500 g of diphenylsulfone, 90.28 g of 4,4'- difluorobenzophenone, 49.78 g of sodium carbonate, and 43.64 g of hydroquinone were added sequentially to a Franz mechanically stirred high-pressure reactor. High-purity nitrogen gas was introduced to the reactor and after three times of repetition, the air in the system was completely replaced with nitrogen gas. Then the reaction system was pressurized to 1.0 MPa, and heated to melt. Stirring was started and adjusted to 100 rpm/min, and the reaction system was warmed to 160°C to react for 20 minutes, heated to 180°C to react for 20 minutes, and then warmed to 225°C , and maintain at 225°C for reaction until the viscosity of the reaction system reached 410 Pa.s. At this time, the reaction time was 55 minutes. The resulting material was poured into cold distilled water to get a white lump; the white lump was crushed with a grinder, washed with ethanol for 5-6 times to remove the solvent diphenyl sulfone, and washed with distilled water for 5-6 times to remove the reaction-generated inorganic salts, so as to get a white powder. A standard sample strip was prepared with a small injection machine and tested for the chromatic value and the impact strength. The experimental results are shown in Table 1.

Example 5

583.58 g of diphenylsulfone, 121.09 g of 4,4'- difluorobenzophenone, 66.77 g of sodium carbonate, and 58.542 g of hydroquinone were added sequentially to a Franz mechanically stirred high-pressure reactor. High-purity nitrogen gas was introduced to the reactor and after three times of repetition, the air in the system was completely replaced with nitrogen gas. Then the reaction system was pressurized to 0.15 MPa, and heated to melt. Start was started and adjusted to 100 rpm/min, and the reaction system was warmed to 160°C to react for 30 minutes, heated to 200°C to react for 30 minutes, and then warmed to 260°C and maintain at 260°C to react until the viscosity of the reaction system reached 410 Pa.s. At this time, the reaction time was 93 minutes. The resulting material was poured into cold distilled water to get a white lump; the white lump was crushed with a grinder, washed with ethanol for 5-6 times to remove the solvent diphenyl sulfone, and washed with distilled water for 5-6 times to remove the reaction-generated inorganic salts, so as to get a white powder. A standard sample strip was prepared with a small injection machine and tested for the chromatic value and the impact strength. The experimental results are shown in Table 1.

Comparative Example 1

600 g of diphenylsulfone, 99.10 g of 4,4'- difluorobenzophenone, 54.64 g of sodium carbonate and 47.90 g of hydroquinone were added sequentially to a Franz mechanically stirred high-pressure reactor. High-purity nitrogen gas was introduced to the reactor and after three times of repetition, the air in the system was completely replaced with nitrogen gas. Then the reaction system was heated to melt under atmospheric pressure. Stirring was started and adjusted to 100 rpm/min, warmed to 200°C and maintained at 200°C to react for 40 minutes, heated to 280°C and maintained at 280°C to react for 1 hour, warmed to 305 °C and maintained at 305°C to react for 2 hour. The resulting material was poured into cold distilled water to get a white lump; the white lump was crushed with a grinder, washed with ethanol for 5-6 times to remove the solvent diphenyl sulfone, and washed with distilled water for 5-6 times to remove the reaction-generated inorganic salts, so as to get a white powder. A standard sample strip was prepared with a small injection machine and tested for the chromatic value and the impact strength. The experimental results are shown in Table 1.

Table 1 (the reaction times in the table do not include the time required for warming)

| Example | Molar ratio of 4,4'-difluoroben zophenone to hydroquino ne | Molar ratio of sodium carbonate to 4,4'-difluoro benzopheno ne | Pressure (MPa) | Reaction time (min) | Charpy Impact strength (kJm$^{-2}$) | Izod impact strength (kJm$^{-2}$) | Chromatic value | | |
|---|---|---|---|---|---|---|---|---|---|
| | | | | | | | L* | a* | b* |
| 1 | 1.043 | 1.0 | 0.2 | 150 | 5.0 | 6.0 | 81.36 | 4.03 | 10.32 |
| 2 | 1.043 | 1.0 | 0.5 | 140 | 6.0 | 7.3 | 82.57 | 3.98 | 10.61 |
| 3 | 1.043 | 1.0 | 0.8 | 110 | 6.5 | 8.0 | 86.29 | 4.05 | 10.44 |
| 4 | 1.043 | 1.0 | 1.0 | 95 | 8.0 | 8.5 | 89.61 | 4.13 | 10.17 |
| 5 | 1.043 | 1.0 | 0.15 | 153 | 4.8 | 5.7 | 81.08 | 4.07 | 10.28 |
| Comparative Example | 1.043 | 1.0 | 0.101 | 220 | 4.0 | 5.0 | 60.33 | 4.10 | 10.56 |

Through the above examples and comparative example, it has been found that by applying pressure during the polymerization reaction not only can the reaction time be shortened and the reaction temperature be reduced, but also there is an improvement in the performance of the polymer. For example, the impact strength of the polymer is improved when compared to the polymer generated under normal pressure, and at the same time the color of the polymer is brighter and whiter. The present inventors have found that the product of the impact strength (IS) and the chromatic value L* is within a specific range, i.e., impact strength (IS)* chromatic value (L*) $\geq$ 310.

The present invention is described in detail above. For those skilled in the art, the present invention may be practiced in a wide range of equivalent parameters, concentrations and conditions without departing from the purpose and scope of the present invention and without unnecessary experimentation. Although particular embodiments of the present invention are given, it should be understood that further improvements can be made to the present invention. In summary, in accordance with the principles of the present invention, the present application is intended to encompass any changes, uses or improvements to the present invention, including changes out of the scope of what has been disclosed in the present application and made with conventional techniques known in the art. A number of applications of the essential features are possible as per the scope of the accompanying claims.

Industrial Applications

The method of preparing polyetheretherketone of the present invention can shorten the reaction time, lower the reaction temperature, and reduce the energy and cost required for the preparation; it also improves the properties of the polymer; for example, the impact strength of the polymer is improved and the color of the polymer is brighter and whiter compared to the polymer generated at atmospheric pressure..

**Claims**

1.  A preparation method of polyetheretherketone, comprising steps of:

    subjecting a first polymerized monomer and a second polymerized monomer to a nucleophilic polycondensation reaction in an inert aprotic solvent in the presence of an alkali carbonate under a pressure of 0.15 MPa to 1.0 MPa in an inert atmosphere to obtain the polyetheretherketone;
    wherein the first polymeric monomer is any one or more of hydroquinone, dihydroxybiphenyl, 4,4'-dihydroxybenzophenone, 2,2-bis(4-hydroxyphenyl)propane, 1,3-bis-(p-hydroxybenzoyl)benzene, 1,4-bis-(p-hydroxy-benzoyl)benzene, $\alpha$-naphthol and $\beta$-naphthol; and
    the second polymeric monomer is any one or more of 4,4'-difluorobenzophenone, 2,4'-difluorobenzophenone, 4-fluoro-4'-chloro-benzophenone, 2-fluoro-4'-chloro-benzophenone, 2-chloro-4'-fluoro- benzophenone, diphenyl ether, 4,4'-diphenoxybenzophenone, terephthaloyl chloride, and isophthaloyl chloride.

2.  The preparation method according to claim 1, wherein the temperature of the nucleophilic polycondensation reaction is in a range from 140°C to 260°C and the time is in a range from 1.5 to 2.5 hours.

3.  The preparation method according to claim 1 or 2, wherein the nucleophilic polycondensation reaction is first carried out at 150-170°C for 20-30 minutes, then carried out at 180-210°C for 20-30 minutes, and finally carried out at 225-260 °C for 55-90 minutes.

4.  The preparation method according to any one of claims 1-3, wherein the molar ratio of the second polymerization monomer to the first polymerization monomer is (1.0-1.1): 1.

5.  The preparation method according to any one of claims 1-4, wherein the molar ratio of the alkali carbonate to the second polymeric monomer is (1.0-1.5): 1.

6.  The preparation method according to any one of claims 1-5, wherein the inert aprotic solvent is at least one of cyclobutanesulfone, diphenylsulfone, glycerol, dimethylacetamide and methylpyrrolidone.

7.  The polyetheretherketone obtained by the preparation method according to any one of claims 1-6.

8.  The polyetheretherketone according to claim 7, wherein the properties of the polyetheretherketone satisfy the following condition: $IS \times L^* \geq 310$ (1);
    in formula (1), IS denotes the cantilever beam impact strength in $kJm^{-2}$; L* denotes the chromatic value.

9. The polyetheretherketone according to claim 8, wherein the polyetheretherketone has a cantilever beam impact strength of 5.5-9 $kJm^{-2}$ and a chromatic value of 60-90.

10. Use of the polyetheretherketone according to any one of claims 7-9 in the preparation of wafer carrier or electronic insulating film.

<div align="center">**INTERNATIONAL SEARCH REPORT**</div>

| | International application No. |
|---|---|
| | **PCT/CN2022/111423** |

**A. CLASSIFICATION OF SUBJECT MATTER**

C08G 65/40(2006.01)i; C08G 65/46(2006.01)i

According to International Patent Classification (IPC) or to both national classification and IPC

**B. FIELDS SEARCHED**

Minimum documentation searched (classification system followed by classification symbols)

C08G

Documentation searched other than minimum documentation to the extent that such documents are included in the fields searched

Electronic data base consulted during the international search (name of data base and, where practicable, search terms used)

CNTXT; CNABS; WPABS; CNKI; CJFD; STN; 万方, WANFANG; 读秀, DUXIU: 中研高分子材料股份有限公司, 谢怀杰, 董波, 聚醚醚酮, 聚芳醚酮, 苯二酚, 二苯甲酮, 萘酚, 二苯醚, 苯二甲酰氯, 压强, 压力, 色度, 浅色, 白度, ether ether ketone, PEEK, PAEK, hydroquinone, benzenediol, quinol, resorcinol, catechol, +benzophenone, diphenyl ether, naphthol, terephthaloyl chloride, pressure, MPa, chroma

**C. DOCUMENTS CONSIDERED TO BE RELEVANT**

| Category* | Citation of document, with indication, where appropriate, of the relevant passages | Relevant to claim No. |
|---|---|---|
| PX | CN 113583232 A (JILIN JOINATURE POLYMER CO., LTD.) 02 November 2021 (2021-11-02)<br>claims 1-10 | 1-10 |
| A | CN 101809063 A (SOLVAY ADVANCED POLYMERS LLC) 18 August 2010 (2010-08-18)<br>description, paragraphs 0031-0037, 0089, 0093, 0100, and 0125-0128 | 1-10 |
| A | CN 105330839 A (JIANGMEN YOUJU NEW MATERIALS CO., LTD.) 17 February 2016 (2016-02-17)<br>entire document | 1-10 |
| A | CN 104530431 A (JIANGMEN YOUJU NEW MATERIALS CO., LTD.) 22 April 2015 (2015-04-22)<br>entire document | 1-10 |
| A | CN 106167548 A (FOSHAN POLIMA ADVANCED TECHNOLOGY & SUPPLIES CO., LTD. et al.) 30 November 2016 (2016-11-30)<br>entire document | 1-10 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 September 2022** | **26 October 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/111423**

| Patent document cited in search report | | | Publication date (day/month/year) | Patent family member(s) | | | Publication date (day/month/year) |
|---|---|---|---|---|---|---|---|
| CN | 113583232 | A | 02 November 2021 | CN | 113583232 | B | 22 March 2022 |
| CN | 101809063 | A | 18 August 2010 | EP | 2178946 | A1 | 28 April 2010 |
| | | | | WO | 2009021918 | A1 | 19 February 2009 |
| | | | | US | 2011224399 | A1 | 15 September 2011 |
| | | | | TW | 200922970 | A | 01 June 2009 |
| | | | | US | 2014163192 | A1 | 12 June 2014 |
| | | | | FR | 2926298 | A1 | 17 July 2009 |
| | | | | FR | 2926299 | A1 | 17 July 2009 |
| | | | | IN | 201001254 | P4 | 13 August 2010 |
| | | | | CN | 101809063 | B | 14 August 2013 |
| | | | | US | 8642713 | B2 | 14 February 2014 |
| | | | | TW | I461458 | B | 21 November 2014 |
| | | | | US | 8969504 | B2 | 03 March 2015 |
| | | | | EP | 2178946 | B1 | 02 December 2015 |
| | | | | IN | 301316 | B | 28 September 2018 |
| CN | 105330839 | A | 17 February 2016 | None | | | |
| CN | 104530431 | A | 22 April 2015 | None | | | |
| CN | 106167548 | A | 30 November 2016 | CN | 106167548 | B | 01 May 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1035679 C
- CN 101125923 B
- EP 0278720 A2